Europäisches Patentamt

European Patent Office

Office européen des brevets

(19)

(11) Veröffentlichungsnummer : **0 077 060**
**B1**

(12)

# EUROPÄISCHE PATENTSCHRIFT

(45) Veröffentlichungstag der Patentschrift :
**21.01.87**

(51) Int. Cl.⁴ : **F 02 M 29/04**

(21) Anmeldenummer : **82109369.7**

(22) Anmeldetag : **09.10.82**

(54) Zwischenflansch zur Anordnung zwischen dem Vergaser und dem Ansaugrohr eines Verbrennungsmotors.

(30) Priorität : **10.10.81 DE 3140403**

(43) Veröffentlichungstag der Anmeldung :
**20.04.83 Patentblatt 83/16**

(45) Bekanntmachung des Hinweises auf die Patenterteilung : **21.01.87 Patentblatt 87/04**

(84) Benannte Vertragsstaaten :
**AT BE CH DE FR GB IT LI LU NL SE**

(56) Entgegenhaltungen :
**BE-A- 507 931**
**DE-A- 2 641 066**
**US-A- 1 821 468**
**US-A- 1 885 559**
**US-A- 1 894 847**
**Römpps Chemie-Lexikon, siebte Auflage,**
**Franckh'sche Verlagshandlung, Stuttgart, Seiten**
**2749, 2750**
**Ullmanns Encyklopädie der technischen Chemie, 4.**
**Auflage, Band 19 Verlag Chemie, Seiten 50, 51**

(73) Patentinhaber : **Schallenberg, Günter**
**Carlstrasse 34**
**D-5112 Baesweiler (DE)**

(72) Erfinder : **Schallenberg, Günter**
**Carlstrasse 34**
**D-5112 Baesweiler (DE)**

(74) Vertreter : **Liermann, Manfred**
**Josef-Schregel-Strasse 19**
**D-5160 Düren (DE)**

## Beschreibung

Die Erfindung betrifft einen Zwischenflansch zur Anordnung zwischen dem Vergaser und dem Ansaugrohr eines Verbrennungsmotors, mit einer Durchtrittsöffnung für das Treibstoff-Luftgemisch, in welche ein kegelförmiger Einsatz aus elastischem, nicht versprödendem säure-, öl- und benzinbeständigem Werkstoff eingesetzt ist, wobei der Zwischenflansch mindestens eine, tangential in die Durchtrittsöffnung einmündende, mit der Außenluft in Verbindung stehende Sekundärluftdüse aufweist.

Bei den bekannten, als Hubkolbenmotoren oder Drehkolbenmotoren ausgebildeten Verbrennungsmotoren, welche ihr Kraftstoff-Luftgemisch ansaugen, wird der im Kraftstoff-Luftgemisch enthaltene Kraftstoff nur unvollständig verbrannt. Dies führt zu einem unerwünschten CO-Anteil im Abgas und einem unnötig hohen Kraftstoffverbrauch.

Insbesondere bei Hubkolbenmotoren hat man versucht, diesen Mangel dadurch zu beheben, daß man innerhalb des Verbrennungsraumes eine nochmalige Verwirbelung des Kraftstoffluftgemisches durch tangentiales Einströmen des genannten Gemisches in den Verbrennungsraum zu erreichen versuchte. Mit dieser nochmaligen Verwirbelung sollte eine feinere und gleichmäßigere Verteilung des Kraftstoffs innerhalb der Verbrennungsluft erzielt werden. Durch diese Maßnahme, deren Durchführung eine geeignete Gestaltung des Verbrennungsraumes erforderte, konnte eine Verbesserung erreicht werden. Es ist jedoch nach wie vor eine Verbesserung in Form einer weiteren Verminderung des CO-Anteils und einer weiteren Senkung des Kraftstoffverbrauchs erstrebenswert.

Eine Einrichtung der eingangs beschriebenen Art ist bekannt geworden durch die BE-A-507 931. Bei dieser Einrichtung sind die einzelnen Lamellen in Ruheposition zwar zu einer kegelstumpfförmigen Anordnung zusammengestellt ; es sind jedoch die einzelnen Lamellen an ihren Lamellenspitzen nicht miteinander verbunden und es ist auch die kleinere Fläche des genannten Kegelstumpfes nicht geschlossen. Hierdurch können sich die einzelnen Lamellen mit ihren Spitzen in radialer Richtung auseinanderbewegen und vergrößern oder verkleinern hierdurch — je nach Bewegungsrichtung — den zentralen Öffnungsquerschnitt. Auf diese Art und Weise wird der jeweilige Durchsatz automatisch geregelt. Tangential gerichtete Sekundärluftdüsen sorgen hierbei für eine gewisse Abmagerung des Gemisches. Da die Strömungsrichtung des Gemisches koaxial zu Kegelstumpfhöhe verläuft, wird der Gemischstrom von der tangential gerichteten Sekundärluft eingeschlossen und es findet eine Durchmischung und Abmagerung erst bei der Einströmung in den Brennraum statt.

Eine vergleichbare Einrichtung ist weiterhin bekannt geworden mit der US-A-1 821 468. Auch dort wird ein Kegeleinsatz verwendet, der jedoch nicht elastisch ausgebildet ist. Die Kegelwandung ist darüber hinaus aus starren Lamellen gebildet, die nach Art von Umlenkschaufeln angeordnet sind und hierbei insgesamt untereinander einen Querschnitt freilassen sollen, der mindestens dem Querschnitt des Kanals, in dem die Einrichtung angeordnet ist, entsprechen soll.

Eine solche Einrichtung ist kompliziert in der Herstellung und ist kaum fähig, sich unterschiedlichen Betriebsbedingungen des zugeordneten Motors anzupassen, so daß in weitesten Betriebsbereichen die an sich mit dieser Einrichtung angestrebte Verbesserung des Gemisches nicht erreicht wird. Darüber hinaus kann auch mit dieser Einrichtung eine Abmagerung des Gemisches nicht erreicht werden.

Der Erfindung liegt somit die Aufgabe zugrunde, eine Einrichtung der eingangs beschriebenen Art vorzuschlagen, mit deren Hilfe eine weitere Verbesserung des Verbrennungsgrades des angesaugten Treibstoff-Luftgemisches und damit eine weitere Absenkung des CO-Gehaltes im Abgas und des Treibstoffverbrauchs erreicht wird.

Erfindungsgemäß wird diese Aufgabe dadurch gelöst, daß der Einsatz als ein zur Vergaserseite hin offener, an der Spitze geschlossener, dünnwandiger Hohlkegel ausgebildet ist, dessen Wandung eine Mehrzahl enger, von der Spitze zur Basis des Hohlkegels verlaufender Schlitze aufweist. Durch diese Anordnung wird das Treibstoff-Luftgemisch in üblicher Weise zunächst durch den Vergaser gesaugt, wodurch das bisher verwendete Gemisch entsteht. Dieses Gemisch muß dann die Durchtrittsöffnung des Zwischenflansches und die engen Schlitze des darin eingesetzten elastischen, dünnwandigen Hohlkegels passieren und wird hierbei neuerlich zerstäubt. Gleichzeitig strömt durch die tangential in die Durchtrittsöffnung einmündende Sekundärluftdüse tangential Senkundärluft mit hoher Geschwindigkeit ein. Hierdurch erfolgt eine weitere Durchmischung und Abmagerung. Diese weitere Durchmischung und Abmagerung erfolgt bereits vor Erreichen des Verbrennungsraumes. Infolge der besseren Durchmischung und Zerstäubung und der Auffüllung mit Sekundärluft entsteht eine vollständigere Verbrennung, also eine Verbrennung mit verbessertem Wirkungsgrad, wodurch die weitere Abmagerung ermöglicht wird. Der bessere Wirkungsgrad der Verbrennung bei gleichzeitiger Abmagerung des Gemisches ergibt eine weitere erhebliche Absenkung des CO-Gehaltes im Abgas und damit auch eine Senkung des Treibstoffverbrauches.

Nach einer Ausgestaltung wird vorgeschlagen, daß mindestens sechs entlang einer Mantellinie verlaufende Schlitze vorgesehen sind. Diese Anordnung hat sich als besonders wirkungsvoll erwiesen und ist gleichzeitig sehr einfach in der Herstellung.

Die Vorrichtung nach der Erfindung soll nun anhand eines Ausführungsbeispiels nach der beigefügten Zeichnung näher erläutert werden.

Es zeigen :

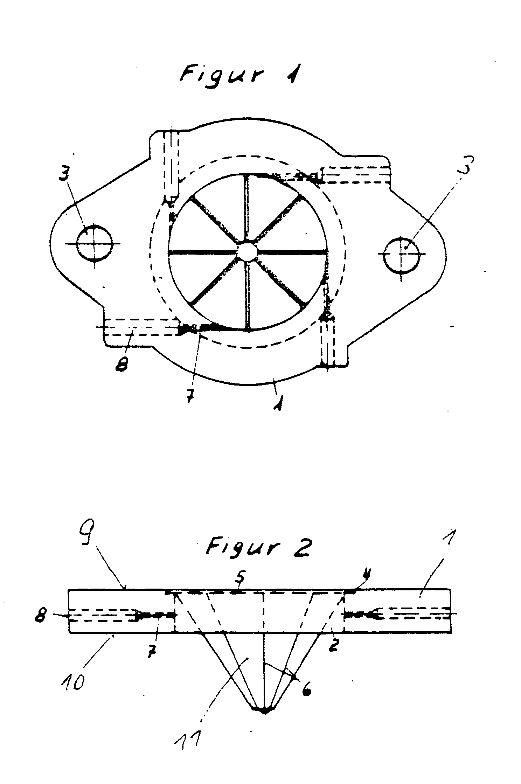

Figur 1 Zwischenflansch mit eingesetztem Hohlkegel in Draufsicht
Figur 2 Zwischenflansch nach Figur 1 in Seitenansicht

Ein Zwischenflansch 1 mit einer kreiszylindrischen Durchtrittsöffnung liegt über die beiden Flächen 9 und 10 einerseits (Fläche 9) am Vergaser und andererseits (Fläche 10) am Ansaugstutzen eines Verbrennungsmotors an und ist in dieser Anordnung über durch die Befestigungsbohrungen 3 hindurchgehende Schrauben dicht geklemmt. Vergaser und Ansaugstutzen sind nicht näher dargestellt. Vergaserseitig weist der Zwischenflansch 1 koaxial zur Durchtrittsöffnung 2 einen Zentriersitz 4 auf, in welchen der Hohlkegelflansch 5 eines Hohlkegels 11 eingesetzt ist. Der Hohlkegelflansch 5 wird vom Vergaser über die bereits geschilderte Klemmung dicht in den Zentriersitz 4 des Zwischenflansches 1 eingepresst. Der Hohlkegel 11 weist im Ausführungsbeispiel acht von der Hohlkegelbasis, also dem Hohlkegelflansch, in Richtung Hohlkegelspitze verlaufende enge Schlitze 6 auf. Beim Saugtakt des Verbrennungsmotors strömt das vom Vergaser erzeugte Gemisch von der Hohlkegelbasis in Richtung Hohlkegelspitze. Hierbei wird es durch die engen Schlitze 6 hindurch gesaugt und dabei neuerlich zerstäubt und verwirbelt.

Der Zwischenflansch 1 weist 4 gleichmäßig über den Umfang der kreiszylindrischen Durchtrittsöffnung 2 angeordnete, tangential in diese einmündende Sekundärluftdüsen 7 auf. Diese Sekundärluftdüsen 7 stehen über ihre Düseneintrittsöffnung 8 mit der Außenluft in Verbindung. Auf diese Art und Weise kann — z. B. verursacht durch den auf der Außenseite des Hohlkegels durch den Ansaugvorgang bestehenden Unterdruck — Sekundärluft durch die Sekundärluftdüsen 7 tangential zum Hauptstrom des Gemisches mit hoher Geschwindigkeit einströmen und hierdurch das Gemisch weiter verwirbeln und durch die hierdurch enstehende weitere, zusätzliche Druckabsenkung den Zerstäubungs- und Durchmischungsvorgang verbessern. Gleichzeitig wird durch die einströmende Sekundärluft das Gemisch abgemagert. Der durch das verbesserte Gemisch günstigere Wirkungsgrad der Verbrennung macht eine solche Abmagerung möglich. Das Ergebnis ist eine weitere Absenkung des CO-Gehaltes im Abgas und eine gleichzeitige Verringerung des Kraftstoffbedarfs.

Die Verwendung von Hochdruckpolyäthylen für den Hohlkegel ist besonders günstig. Hochdruckpolyäthylen läßt sich leicht verarbeiten, ist sehr elastisch, versprödet nicht bei Kälte und ist säure-, öl- und benzinbeständig. Ebenso hat sich die Verwendung von acht Schlitzen in der dargestellten Lage als in der Wirkung besonders effektiv erwiesen.

Die Verwendung von vier Sekundärluftdüsen in der dargestellten tangentialen Anordnung mit einem Düsendurchmesser von 1-3 mm hat sich ebenfalls als besonders günstig erwiesen. Bei einem Motor des oberen Mittelklassebereichs hat sich ein Sekundärluftdüsendurchmesser bei einer Verwendung von 4 Sekundärluftdüsen von 2,5 mm Durchmesser als besonders wirksam erwiesen.

Weiterhin hat sich die Verwendung von Polyamid-6,6 zur Herstellung des Flansches als sehr vorteilhaft erwiesen, weil dieser Werkstoff einerseits leicht bearbeitbar ist und andererseits alle hier notwendigen mechanischen Eigenschaften aufweist. Insgesamt kann ein solches Gerät außerordentlich preiswert und einfach hergestellt und eingebaut werden. Der Einbau bereits im Werk sowie die Nachrüstung bereits vorhandener Vergasermotoren ist gleichermaßen einfach. Das Gerät hat sich insbesondere in der Gestaltung nach dem beschriebenen Ausführungsbeispiel als besonders wirksam erwiesen. Durch den Einsatz des Gerätes ist es außerdem möglich, die heute nötige komplizierte Gestaltung der Brennkammer wieder zu vereinfachen, wodurch die Fertigungskosten gesenkt werden können.

**Patentansprüche**

1. Zwischenflansch zur Anordnungung zwischen dem Vergaser und dem Ansaugrohr eines Verbrennungsmotors, mit einer Durchtrittsöffnung (2) für das Treibstoff-Luftgemisch, in welcher ein kegelfömiger Einsatz (11) aus elastischem, nicht versprödendem säure-,öl- und benzinbeständigem Werkstoff eingesetzt ist, wobei der Zwischenflansch mindestens eine tangential in die Durchtrittsöffnung einmündende, mit der Außenluft in Verbindung stehende Sekundärluftdüse (7) aufweist, dadurch gekennzeichnet, daß der Einsatz (11) als ein zur Vergaserseite hin offener, an der Spitze geschlossener, dünnwandiger Hohlkegel ausgebildet ist, dessen Wandung eine Mehrzahl enger, von der Spitze zur Basis des Hohlkegels verlaufender Schlitze (6) aufweist.

2. Zwischenflansch nach Anspruch 1, dadurch gekennzeichnet, daß mindestens sechs entlang einer Mantellinie verlaufende Schlitze vorgesehen sind.

**Claims**

1. Intermediate flange to be arranged between the carburetter and the intake pipe of an internal combustion engine with an opening (2) for the fuel-air-mixture in which a cone-shaped insert (11) is inserted made of an elastic material which does not become embrittled and which is resistant to acid, oil and petrol, whereby the intermediate flange has at least one secondary air nozzle (7) running tangential into the opening and connected to the outside air, characterized in that the insert (11) is formed as a thin-walled hollow cone open towards the carburettor and closed on the point whose wall has a plurality of narrow slits (16) running from the point to the base of the hollow cone.

2. Intermediate flange according to claim 1 characterized in that at least six slits are provided running along the elements.

## Revendications

1. Bride intermédiaire destinée à être montée entre le carburateur et la tubulure d'admission d'un moteur à combustion interne et comportant une ouverture (2) pour le passage du mélange carburant-air, dans laquelle est insérée une pièce rapportée conique (11), faite d'un matériau élastique, non fragile et résistant aux acides, à l'huile et à l'essence, la bride intermédiaire comportant au moins un injecteur d'air secondaire (7) qui débouche tangentiellement dans l'ouverture de passage et qui est placé en communication avec l'atmosphère, caractérisée en ce que la pièce rapportée (11) est réalisée sous la forme d'un cône creux à paroi mince, ouvert du côté du carburateur et fermé à sa pointe, cône dont la paroi présente un certain nombre de fentes étroites (6), qui s'étendent de la pointe jusqu'à la base du cône creux.

2. Bride intermédiaire selon la revendication 1, caractérisée en ce qu'il est prévu au moins six fentes s'étendant le long d'une génératrice.

Figur 1

Figur 2

1